# EUROPEAN PATENT APPLICATION

(11) **EP 4 850 784 A1**
(43) Date of publication of application: **09.12.2026**
(21) Application number: 24922240.7
(22) Date of filing: 31.01.2024
(51) Int. Cl.: B01D 53/04, B01D 53/62, B01J 20/28, C01B 32/50

(54) **HONEYCOMB STRUCTURE, METHOD FOR MANUFACTURING SAME, AND CARBON DIOXIDE RECOVERY DEVICE**

(71) Applicant: NGK Corporation, Nagoya-shi, Aichi 467-8530 (JP)
(72) Inventor: INOUE,Daichi, Nagoya-shi, Aichi 467-8530 (JP); NAGAI,Shungo, Nagoya-shi, Aichi 467-8530 (JP); ONO,Mitsuharu, Nagoya-shi, Aichi 467-8530 (JP); NAKASHIMA,Takuya, Nagoya-shi, Aichi 467-8530 (JP); NIIMI,Norikazu, Nagoya-shi, Aichi 467-8530 (JP)
(74) Representative: MERH-IP Matias Erny Reichl Hoffmann Patentanwälte PartG mbB
(86) International application number: PCT/JP2024/003158
(87) International publication number: WO 2025/163832

(57) **Abstract**

A honeycomb structure includes a plurality of cell channels (cells 108) that pass through an interior of the honeycomb structure 100 and are defined by partition walls 112. The partition walls 112 contain a carbon dioxide adsorbent, a water resistance-imparting agent, and an organic binder.

## Description

### [Technical Field]

The present invention relates to a honeycomb structure and a method for producing the same, as well as a carbon dioxide capture device.

### [Background Art]

To realize a decarbonized society, there is a growing need for technologies to capture and utilize carbon dioxide (CO₂) from the atmosphere and/or exhaust gases. As a representative conventional CO₂ capture technology, a technology for adsorbing CO₂ from the atmosphere (DAC: Direct Air Capture) has been developed. There are several types of DAC, including liquid absorption, membrane separation, and solid adsorption methods. Among these, in the solid adsorption method, it is common to support CO₂ adsorption (absorption) materials on a substrate. Honeycomb structures, which have a proven track record in applications such as the purification of automotive exhaust gases, are expected to serve as substrates for the solid adsorption method.

Conventional honeycomb structures are typically produced by extruding a green body obtained by kneading a forming mixture containing ceramic raw materials, water, and binders to form a honeycomb formed body, followed by heat treatment such as firing (Patent Literature 1). However, heat treatments such as firing require a large amount of energy, and in many cases, CO₂ is generated due to the combustion of hydrocarbon fuels. Furthermore, if an organic binder is used, additional CO₂ is generated when it burns during firing.

Patent Literature 2 describes a honeycomb ceramic substrate for CO₂ capture. This honeycomb ceramic substrate for CO₂ capture includes a honeycomb ceramic substrate having porous partition walls, a plurality of inorganic support particles located within pores of at least one of the porous partition walls, and an organic CO₂ sorbent supported by at least one of the inorganic support particles. This honeycomb ceramic substrate for CO₂ capture is produced through a heat treatment at elevated temperature. Specifically, it is produced by bringing a honeycomb ceramic substrate obtained through a forming step and a firing step into contact with a support precursor slurry, calcining the substrate at a temperature of from approximately 100°C to approximately 600°C for a period of from approximately 1 hour to approximately 10 hours, further bringing it into contact with an organic CO₂ sorbent, and finally drying it at a temperature of from approximately 50°C to approximately 100°C.

Under this background, techniques for producing honeycomb structures without firing are also known. Patent Literature 3 describes a honeycomb substrate having a plurality of partition walls extending in an axial direction from an inlet end to an outlet end, thereby forming a plurality of flow channels, wherein an amine polymer having functional units capable of absorbing CO₂ is dispersed in the inorganic powder component of the partition walls of the honeycomb substrate, the honeycomb substrate comprising a mixture of an inorganic powder component and an organic binder. This honeycomb substrate is formed by a method including: dry-blending an inorganic oxide powder component and an organic binder into a mixture; adding a solution of an amine polymer and a solvent to the mixture to form a precursor; mulling the precursor; extruding the mulled precursor to form a connected monolith having a plurality of partition walls extending in an axial direction from an inlet end to an outlet end, thereby forming a plurality of flow channels; and drying the connected monolith to remove the solvent therefrom, thereby forming an absorbent structure for CO₂ capture.

### [Citation List]

### [Patent Literature]

[PTL 1] Japanese Patent Application Publication No. 2020-019690 A
[PTL 2] Japanese Patent Application Publication No. 2018-538137 A
[PTL 3] Japanese Patent Application Publication No. 2015-508018 A

### [Summary of Invention]

### [Technical Problem]

The honeycomb substrate described in Patent Literature 3 uses an amine polymer and possesses functional units capable of absorbing CO₂, thereby enabling CO₂ capture. Furthermore, since this honeycomb substrate is produced without undergoing a high-temperature firing step, it is possible to reduce CO₂ emissions generated during production. However, the honeycomb substrate described in Patent Literature 3 uses a water-soluble amine polymer and is easily leached by water. Furthermore, many of the organic binders that remain due to the absence of firing are also water-soluble. For this reason, there is room for improvement in the water resistance of the honeycomb substrate described in Patent Literature 3.

The present invention has been made to solve the above-mentioned problems, and an object of the present invention is to provide a honeycomb structure with improved water resistance, a method for producing the same, and a carbon dioxide capture device.

### [Solution to Problem]

As a result of extensive studies to solve the above problems, the inventors have found that water resistance can be improved by using a combination of a carbon dioxide adsorbent, a water resistance-imparting agent, and an organic binder as materials for the honeycomb structure, and have completed the present invention. That is, this invention is exemplified as follows:
[1] A honeycomb structure comprising:
   a plurality of cell channels that pass through an interior of the honeycomb structure and are defined by partition walls,
   wherein the partition walls comprise a carbon dioxide adsorbent, a water resistance-imparting agent, and an organic binder.
[2] The honeycomb structure according to [1], wherein the partition walls further comprise an inorganic binder.
[3] The honeycomb structure according to [1] or [2], wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.
[4] The honeycomb structure according to any one of [1] to [3], wherein the partition walls have a peak attributable to Si-C bending when measured by FT-IR (Fourier transform infrared spectroscopy).
[5] The honeycomb structure according to any one of [1] to [4], wherein the carbon dioxide adsorbent is dispersed in the partition walls.
[6] The honeycomb structure according to any one of [1] to [5], wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.
[7] The honeycomb structure according to any one of [1] to [6], wherein the honeycomb structure has a water-resistant layer on surfaces of the partition walls.
[8] The honeycomb structure according to [7], wherein the water-resistant layer comprises one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.
[9] The honeycomb structure according to any one of [1] to [8], wherein an amount of carbon dioxide adsorbed is 0.5 mol/kg or more.
[10] The honeycomb structure according to any one of [1] to [9], wherein the carbon dioxide adsorbent is a solid organic compound having an amino group(s).
[11] The honeycomb structure according to [10], wherein the solid organic compound is a weakly basic anion exchange resin having an amino group(s).
[12] The honeycomb structure according to [10], wherein the solid organic compound comprises one or more selected from styrene-divinylbenzene copolymers having amino groups and (meth)acrylic acid-divinylbenzene copolymers having amino groups.
[13] A method for producing a honeycomb structure, the method comprising:
   kneading a forming raw material comprising a solvent, a carbon dioxide adsorbent, a water resistance-imparting agent, and an organic binder to prepare a green body;
   forming the green body into a honeycomb formed body, the honeycomb formed body having a plurality of cell channels that pass through an interior of the honeycomb formed body and are defined by partition walls; and
   drying the honeycomb formed body.
[14] The method for producing a honeycomb structure according to [13], wherein the forming raw material further comprises an inorganic binder.
[15] The method for producing a honeycomb structure according to [13] or [14], wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.
[16] The method for producing a honeycomb structure according to any one of [13] to [15], wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.
[17] The method for producing a honeycomb structure according to any one of [13] to [16], further comprising forming a water-resistant layer on surfaces of the partition walls.
[18] The method for producing a honeycomb structure according to any one of [13] to [17], wherein the carbon dioxide adsorbent is a solid organic compound having an amino group(s).
[19] The method for producing a honeycomb structure according to [18], wherein the solid organic compound is a weakly basic anion exchange resin having an amino group(s).
[20] The method for producing a honeycomb structure according to [18], wherein the solid organic compound comprises one or more selected from styrene-divinylbenzene copolymers having amino groups and (meth)acrylic acid-divinylbenzene copolymers having amino groups.
[21] A carbon dioxide capture device comprising one or more of the honeycomb structures according to any one of [1] to [12].

### [Advantageous Effects of Invention]

According to the present invention, it is possible to provide a honeycomb structure with improved water resistance, a method for producing the same, and a carbon dioxide capture device.

### [Brief Description of Drawings]

[Fig. 1] Fig. 1 is a schematic perspective view of a honeycomb structure according to an embodiment of the present invention.
[Fig. 2] Fig. 2 is a schematic cross-sectional view of a honeycomb structure according to an embodiment of the present invention, which is parallel to a height direction (extending direction of cells).
[Fig. 3] Fig. 3 is a view schematically illustrating a method for measuring a hardness of a green body using a hardness tester.
[Fig. 4] Fig. 4 is an enlarged view illustrating a shape and dimensions of a tip of the hardness tester.
[Fig. 5] Fig. 5 is a graph showing spring characteristics of a spring material used in the hardness tester.

### [Description of Embodiments]

A honeycomb structure of the present invention has a plurality of cell channels that pass through an interior of the honeycomb structure and are defined by partition walls, wherein the partition walls include a carbon dioxide adsorbent, a water resistance-imparting agent, and an organic binder. With such a configuration, the honeycomb structure of the present invention can improve water resistance. Therefore, when desorbing carbon dioxide from a carbon dioxide adsorbent that has adsorbed carbon dioxide (hereinafter also referred to as "CO₂") using a desorbing gas such as steam (which may be heated), the outflow or degradation of the carbon dioxide adsorbent can be suppressed. Furthermore, the honeycomb structure of the present invention is highly practical as a product for adsorbing carbon dioxide from the atmosphere and is expected to contribute significantly to the realization of the decarbonized society.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### (1. Honeycomb Structure)

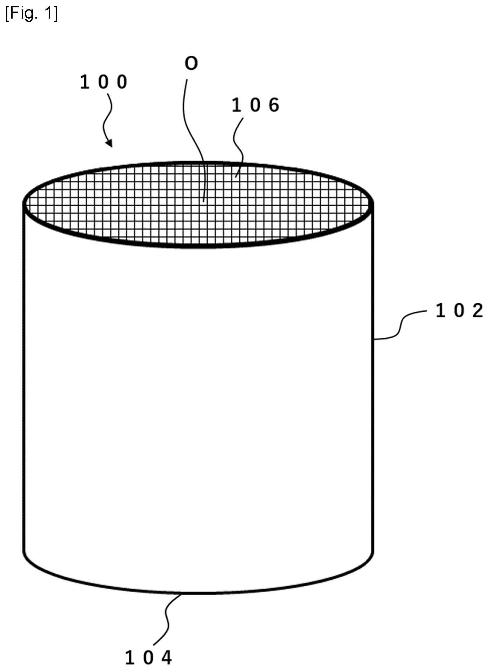

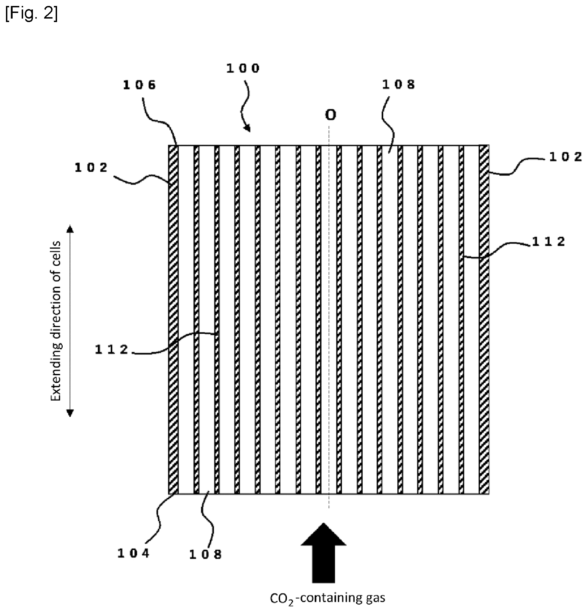

Fig. 1 shows a schematic perspective view of a honeycomb structure according to an embodiment of the present invention. Fig. 2 shows a schematic cross-sectional view of the honeycomb structure shown in Fig. 1, which is parallel to a height direction (extending direction of cells).

As shown in Figs. 1 and 2, a honeycomb structure 100 includes an outer peripheral wall 102 and partition walls 112 disposed on an inner peripheral side of the outer peripheral wall 102, the partition walls 112 extending from a first end face 104 to a second end face 106, and defining a plurality of cells 108 to form fluid flow paths (cell channels). The plurality of cells 108 are arranged in parallel with one another. The honeycomb structure 100 is of a flow-through type in which both ends of each cell 108 open toward the first end face 104 and the second end face 106. When a CO₂-containing gas, such as atmospheric air, flows in from the first end face 104 where the inlets of the plurality of cells 108 are located, CO₂ is adsorbed as the gas passes through the plurality of cells 108, and a gas with a reduced CO₂ concentration flows out from the second end face 106 where the outlets of the plurality of cells 108 are located.

The end face shape of the honeycomb structure 100 is not particularly limited, but it may, for example, be a round shape such as circular, elliptical, racetrack and oblong shapes; a polygonal shape such as triangular and rectangular shapes; and any other irregular shapes. The overall external shape of the honeycomb structure 100 is typically a pillar shaped body. The honeycomb structure 100 shown in FIG. 1 has a circular end face shape, and has a cylindrical shape as a whole.

When the honeycomb structure 100 is the pillar shaped body, its height (the length from the first end face 104 to the second end face 106) is not particularly limited and may be set appropriately depending on the application and required performance. There are also no particular limitations on the relationship between the height of the honeycomb structure 100 and the maximum diameter of each end face (referring to the longest diameter passing through the center of gravity of each end face of the honeycomb structure 100). Therefore, the height of the honeycomb structure 100 may be longer than the maximum diameter of each end face, or the height of the honeycomb structure 100 may be shorter than the maximum diameter of each end face.

The length of the honeycomb structure 100 in the extending direction of the cells 108 (the height direction) is not particularly limited. However, while a longer length can increase an amount of CO₂ adsorbed, an excessively long length results in greater pressure loss. Therefore, this length is preferably 20 to 350 mm, more preferably 20 to 300 mm, and still more preferably 20 to 250 mm.

The maximum diameter of each end face of the honeycomb structure 100 is not particularly limited. However, while a larger maximum diameter can increase the amount of CO₂ adsorbed, an excessively large diameter increases producing difficulty. Therefore, the maximum diameter is preferably 20 to 450 mm, more preferably 20 to 400 mm, and still more preferably 20 to 350 mm.

The partition walls 112 making up the honeycomb structure 100 contain a carbon dioxide adsorbent, a water resistance-imparting agent, and an organic binder. Furthermore, the outer peripheral wall 102 making up the honeycomb structure 100 may also contain a carbon dioxide adsorbent, a water resistance-imparting agent, and an organic binder, as with the partition walls 112. Each of the carbon dioxide adsorbent, the water resistance-imparting agent, and the organic binder may be contained alone or in a combination of two or more types.

It is preferable that the carbon dioxide adsorbent be dispersed in the partition walls 112. Similarly, it is preferable that the carbon dioxide adsorbent be dispersed in the outer peripheral wall 102. By dispersing the carbon dioxide adsorbent in the partition walls 112 and the outer peripheral wall 102 in this manner, the amount of CO₂ adsorbed can be increased.

The carbon dioxide adsorbent is not particularly limited and may be any known adsorbents. Among these, the carbon dioxide adsorbent is preferably a solid organic compound having one or more selected from amino groups (-NH₂, -NHR, -NRR' in which R and R' represent organic groups). While it is not intended to limit the present invention by any theory, solid organic compounds having amino groups can adsorb CO₂ by reacting with CO₂ to form carbamates or bicarbonates.

From the perspective of water resistance, it is desirable for the solid organic compound having an amino group(s) to be water-insoluble. Furthermore, the solid organic compound having an amino group may have any one of -NH₂, -NHR, or -NRR' in which R and R' represent organic groups, or may have a combination of two or more of these. Among amino groups, particularly a primary amine (-NH₂) is preferably contained as a functional group. It is also preferable that the solid organic compound having an amino group(s) contain an aromatic ring.

Specific examples of the solid organic compounds having amino groups include weakly basic anion exchange resins having amino groups. Therefore, for example, the solid organic compound having amino groups may contain one or more selected from styrene-divinylbenzene copolymers having amino groups and (meth)acrylic acid-divinylbenzene copolymers having amino groups.

From the perspective of CO₂ adsorption performance, the exchange capacity of the weakly basic anion exchange resin is preferably 0.6 meq/mL or more, more preferably 1.0 meq/mL or more, and still more preferably 1.4 meq/mL or more. The exchange capacity of the weakly basic anion exchange resin is determined, according to the tap method, by treating 10 mL of the ion exchange resin with hydrochloric acid, and then measuring an amount of chloride ions eluted when excess hydrochloric acid is washed with ethanol and ammonia water is caused to flow.

The content of the carbon dioxide adsorbent in the partition walls 112 (and, if necessary, the outer peripheral wall 102) is not particularly limited, but, from the viewpoint of achieving a good balance between CO₂ adsorption performance, crack suppression during drying, and water resistance, it is preferably 40 to 94% by mass, more preferably 40 to 90% by mass, and still more preferably 40 to 80% by mass.

The water resistance-imparting agents are not particularly limited and may be any known agents. The use of the water resistance-imparting agent can improve the water resistance of the honeycomb structure 100.

Examples of the water resistance-imparting agents include silicones, partially benzalized polyvinyl alcohol, (meth)acrylic resins, polyacrylate resins, polyacrylonitrile resins such as carboxylated acrylonitrile-butadiene copolymers, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers. These may be used alone or in a combination of two or more types. Among these, the water resistance-imparting agents are preferably resins with high CO₂ permeability, and silicones are particularly preferred. Because the silicones have high CO₂ permeability, the CO₂ adsorption performance can be maintained even if the surface of the carbon dioxide adsorbent is coated with silicones.

Non-limiting examples of the silicones include silicone resins, silicone waxes, silicone rubbers, silicone oils, and copolymers of silicone with other monomers. These can be used alone or in combination of two or more.

The partition walls 112 (and, if necessary, the outer peripheral wall 102) preferably has a peak attributable to Si-C bending when measured by FT-IR (Fourier transform infrared spectroscopy). If such a peak is present, it can be concluded that silicones are contained in the partition walls 112 (and the outer peripheral wall 102, if necessary).

Here, in FT-IR, the peak attributable to Si-C bending is the peak appearing at around 1250 to 1270 cm⁻¹ in the FT-IR spectrum. The FT-IR spectrum is obtained by crushing the honeycomb structure 100 in an agate mortar and measuring the resulting crushed material using a Fourier transform infrared spectrometer.

The content of the water resistance-imparting agent in the partition walls 112 (and, if necessary, the outer peripheral wall 102) is not particularly limited, but, from the perspective of water resistance, it is preferably 2 to 20% by mass, more preferably 3 to 18% by mass, and still more preferably 4 to 15% by mass.

The organic binder is not particularly limited and may be any known type. The use of the organic binder can improve formability and enhance the strength of the honeycomb structure 100.

Examples of the organic binders include methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose. These may be used alone or in a combination of two or more types. Furthermore, among these, the use of the water-soluble organic binders such as methylcellulose, hydroxypropyl methylcellulose, hydroxyethyl cellulose, hydroxypropyl cellulose, carboxymethyl cellulose, polyvinyl alcohol, hydroxyethyl methylcellulose, and polyethylene oxide can reduce environmental impact, the risk posed by organic solvent vapors during drying, and production costs.

The organic binder is preferably such that, when 11 g of a test substance is added to 1 L of water at 60°C, stirred at 500 rpm for 30 minutes, cooled to 20°C after stirring, and the liquid portion is removed by suction filtration using filter paper Type 5C as defined in JIS P3801: 1995 and the solid portion is dried, the mass of the solid portion is 1 g or less. Furthermore, the organic binder is more preferably such that, when 21 g of the test substance is added to 1 L of water at 60°C, stirred at 500 rpm for 30 minutes, cooled to 20°C after stirring, and the liquid portion is removed by suction filtration using filter paper Type 5C as defined in JIS P3801:1995 and the solid portion is dried, the mass of the solid portion is 1 g or less. Furthermore, the organic binder is still more preferably such that, when 31 g of the test substance is added to 1 L of water at 60°C, stirred at 500 rpm for 30 minutes, cooled to 20°C after stirring, and the liquid portion is removed by suction filtration using filter paper Type 5C as defined in JIS P3801:1995 and the solid portion is dried, the mass of the solid portion is 1 g or less.

The content of the organic binder in the partition walls 112 (and, if necessary, the outer peripheral wall 102) is not particularly limited, but, from the viewpoint of water resistance, it is preferably 2 to 20% by mass, more preferably 3 to 18% by mass, and still more preferably 5 to 15% by mass.

The partition walls 112 (and, if necessary, the outer peripheral walls 102) making up the honeycomb structure 100 may further contain an inorganic binder in addition to the above components.

The inorganic binder is not particularly limited and may be any known type. The use of the inorganic binder can improve the water resistance of the honeycomb structure 100 and suppress cracks during drying. In particular, since the inorganic binders are generally water-insoluble, they can suppress a decrease in water resistance.

As used herein, the term "water-insoluble" refers to a property wherein, when 11 g of the test substance is added to 1 L of water at 20°C and stirred at 500 rpm for 30 minutes, and then the liquid portion is removed by suction filtration using filter paper Type 5C as defined in JIS P3801:1995 and the solid portion is dried, the mass of the solid portion is 10 g or more.

Specific examples of the inorganic binders include clay, diatomaceous earth, layered clay minerals, montmorillonite, hydrotalcite, activated clay, acid clay, hectorite, halloysite, attapulgite, silica, silica gel, alumina, talc, chlorite, vermiculite, mica, illite, pyrophyllite, sericite, kaolin, sepiolite, boehmite, palygorskite, and bentonite. These may be used alone or in a combination of two or more types.

The partition walls 112 (and, if necessary, the outer peripheral walls 102) making up the honeycomb structure 100 may further contain, in addition to the above components, known additives such as surfactants and pore formers, to the extent that they do not impair the effects of the present invention.

Specific examples of the surfactants include ethylene glycol, dextrin, fatty acid soaps, and polyalcohols. These may be used alone or in a combination of two or more types.

Specific examples of the pore formers include wood flour, activated carbon, hollow resins, porous resins, hollow inorganic materials, and porous inorganic materials. These may be used alone or in a combination of two or more types.

The average thickness of the partition walls 112 (and, if necessary, the outer peripheral walls 102) making up the honeycomb structure 100 is not particularly limited, but, from the viewpoint of ensuring strength, it is preferably 50 µm or more, more preferably 60 µm or more, and still more preferably 70 µm or more. Furthermore, from the viewpoint of suppressing pressure loss, the average thickness of the partition walls 112 is preferably 600 µm or less, more preferably 550 µm or less, and still more preferably 500 µm or less. Therefore, the average thickness of the partition walls 112 is preferably 50 to 600 µm, more preferably 60 to 550 µm, and still more preferably 70 to 500 µm. As used herein, the thickness of the partition walls 112 is defined as a length of a portion passing through the partition walls 112 of line segments connecting the centers of gravity of adjacent cells 108, as viewed in a cross-section perpendicular to the extending direction of the cells 108. Furthermore, the average thickness of the partition walls 112 refers to an average value of the thicknesses of all partition walls 112 in the honeycomb structure 100.

Although a cell density (number of cells per unit cross-sectional area) of the honeycomb structure 100 is not particularly limited, from the viewpoint of improving the contact area between the carbon dioxide adsorbent contained in the partition walls 112 and the passing gas, it is preferably 30 cells/in² (4.65 cells/cm²) or more, more preferably 40 cells/in² (6.20 cells/cm²) or more, and still more preferably 50 cells/in² (7.75 cells/cm²) or more. Furthermore, from the viewpoint of ensuring gas flow paths and minimizing pressure loss, the cell density is preferably 2000 cells/in² (310.00 cells/cm²) or less, more preferably 1200 cells/in² (186.00 cells/cm²) or less, and still more preferably 900 cells/in² (139.50 cells/cm²) or less. Therefore, the cell density is preferably 30 to 2000 cells/in² (4.65 to 310.00 cells/cm²), more preferably 40 to 1200 cells/in² (6.20 to 186.00 cells/cm²), and still more preferably 50 to 900 cells/in² (7.75 to 139.50 cells/cm²), for example. As used herein, the cell density is calculated by dividing the number of cells 108 in the honeycomb structure 100 by the area of one end face of the honeycomb structure 100, excluding the outer peripheral wall 102.

The shape of the cells 108 in a cross-section orthogonal to the extending direction of the cells 108 (the height direction of the honeycomb structure 100) is not particularly limited, but it may preferably be rectangular, hexagonal, octagonal, circular, or a combination thereof. Among these, it is preferable that the shape of the cells 108 be rectangular or hexagonal. With such shapes of the cells 108, the pressure loss when fluid flows through the honeycomb structure 100 is reduced.

The honeycomb structure 100 may further include a water-resistant layer on the surfaces of the partition walls 112 (and, if necessary, the outer peripheral walls 102). Providing the water-resistant layer allows the water resistance of the honeycomb structure 100 to be further improved.

The water-resistant layer may preferably contain a water resistance-imparting agent, although not particularly limited. The same water resistance-imparting agents as those described above may be used. Among these, it is preferable that the water resistance-imparting agent be silicones. Since the silicones have high CO₂ permeability, the CO₂ adsorption performance can be maintained even if the surfaces of the partition walls 112 (and, if necessary, the outer peripheral walls 102) are coated with silicones.

The honeycomb structure 100 preferably has an amount of carbon dioxide (CO₂) adsorbed of 0.5 mol/kg or more, and more preferably 0.8 mol/kg or more. With such an amount of CO₂ adsorbed, the CO₂ adsorption performance can be considered good.

The amount of CO₂ adsorbed can be measured, for example, as follows: First, a cubic sample having 20 mm × 20 mm × 40 mm (length in the extending direction of the cells 108) is cut from the vicinity of the center of the honeycomb structure 100. This sample is then placed in a sealed container, and CO₂ concentration sensors are installed on the inlet and outlet sides of the cells 108 of the sample. Subsequently, as a pretreatment, a nitrogen gas heated to 90 to 100°C is passed through the sample at a flow rate of 1.5 L/min until the CO₂ concentration on the outlet side reaches 0 ppm, and heating is then stopped while continuing to pass the nitrogen gas until the temperature reaches 25°C (room temperature). After reaching 25°C, air at 25°C is passed through the sample at a flow rate of 15 L/min, and the amount of CO₂ adsorbed (mol) until saturation is reached is measured. By dividing the measured amount of CO₂ adsorbed (mol) by the mass of the sample (kg), the amount of CO₂ adsorbed per unit mass of the sample (mol/kg) can be calculated.

The honeycomb structure 100 preferably has a CO₂ residual ratio as measured, an indicator of the carbon dioxide (CO₂) adsorption rate, of less than 50%, and more preferably less than 40%. With such a CO₂ residual ratio, the CO₂ adsorption performance can be considered good.

The CO₂ residual ratio can be measured, for example, as follows: First, a cubic sample weighing approximately 1.0 g is cut from the vicinity of the center of the honeycomb structure 100. Next, as a pretreatment, this sample is heated at 80°C for 10 minutes to desorb the CO₂. The sample is then left in a 4-liter sealed container for 100 seconds to allow it to absorb CO₂ from the atmosphere. A CO₂ concentration sensor is installed inside the sealed container, and the CO₂ residual ratio is calculated according to the following equation based on the CO₂ concentrations inside the sealed container before and after the sample is left therein:
CO₂ residual ratio (%) = CO₂ concentration after sample is left / CO₂ concentration before sample is left × 100

The honeycomb structure 100 preferably has a B-axis compressive strength (compressive strength in a direction perpendicular to the extending direction of the cells 108) of 0.05 MPa or more, after a cubic sample having a side length of 20 mm cut from a absolutely dried honeycomb structure 100 and immersed in water for 24 hours. If the B-axis compressive strength falls within this range, the water resistance can be considered good.

The B-axis compressive strength can be determined by placing a weight on the side of the honeycomb structure 100 to apply a compressive load of 0.05 MPa to the honeycomb structure and visually evaluating the degree of deformation. In this evaluation, if there is no deformation or only minor deformation, it can be said that the structure withstands a load of 0.05 MPa.

### (2. Methods for CO₂ Capture and Desorption)

According to an embodiment of the present invention, a method for capturing and desorbing CO₂ using the honeycomb structure 100 is provided.

Specifically, the method for capturing CO₂ according to an embodiment of the present invention includes passing a target gas containing CO₂ (CO₂-containing gas) through a plurality of cell channels of the honeycomb structure 100, adsorbing the CO₂ in the target gas using a carbon dioxide adsorbent while the target gas passes through the plurality of cell channels, and discharging the target gas with a reduced CO₂ concentration from the honeycomb structure 100.

The target gas is not particularly limited as long as it is a gas containing CO₂, but examples include ambient air (including outdoor air as well as indoor air), factory exhaust gas, ship exhaust gas, and power plant exhaust gas.

Furthermore, the method for capturing CO₂ according to an embodiment of the present invention includes causing a desorption gas or a heated desorption gas to flow through the plurality of cell channels of the honeycomb structure 100 that has adsorbed CO₂, and desorbing CO₂ from the carbon dioxide adsorbent into the desorption gas while the desorption gas passes through the plurality of cell channels.

Here, the desorption gas is not particularly limited as long as it is capable of desorbing CO₂, but steam, for example, may be used. It is preferable that the steam be at a high temperature of 80°C or more. Furthermore, the desorption gas may be heated by a heater or by mixing it with a high-temperature gas.

### (3. Method for Producing Honeycomb Structure)

A preferred example of the method for producing a honeycomb structure according to an embodiment of the present invention is described below.

The method for producing a honeycomb structure according to an embodiment of the present invention includes: a step A of kneading a forming raw material containing a solvent, a carbon dioxide adsorbent, a water resistance-imparting agent, and an organic binder to prepare a green body; a step B of forming the green body into a honeycomb formed body, the honeycomb formed body having a plurality of cell channels that pass through the interior of the honeycomb formed body and are defined by partition walls; and a step C of drying the honeycomb formed body.

### (Step A)

In Step A, a forming raw material containing a solvent, a carbon dioxide adsorbent, a water resistance-imparting agent, and an organic binder is kneaded to prepare a green body. Examples of the solvent (dispersion medium) include water or a mixed solvent of water and an organic solvent such as alcohol. In particular, water is suitably used.

From the viewpoint of achieving a good balance between CO₂ adsorption performance, crack suppression during drying, and water resistance, it is preferable that the content of the carbon dioxide adsorbent in the forming raw material, excluding the solvent, be 40 to 94% by mass, the content of the water resistance-imparting agent in the forming raw material, excluding the solvent, be 2 to 20% by mass, and the content of the organic binder in the forming raw material, excluding the solvent, be 2 to 20% by mass. Furthermore, it is more preferable that the content of the carbon dioxide adsorbent in the forming raw material, excluding the solvent, be 50 to 90% by mass, the content of the water resistance-imparting agent in the forming raw material, excluding the solvent, be 3 to 18% by mass, and the content of the organic binder in the forming raw material, excluding the solvent, be 3 to 18% by mass. Furthermore, it is still more preferable that the content of the carbon dioxide adsorbent in the forming raw material, excluding the solvent, be 60 to 85% by mass, the content of the water resistance-imparting agent in the forming raw material, excluding the solvent, be 5 to 15% by mass, and the content of the organic binder in the forming raw material, excluding the solvent, be 5 to 15% by mass.

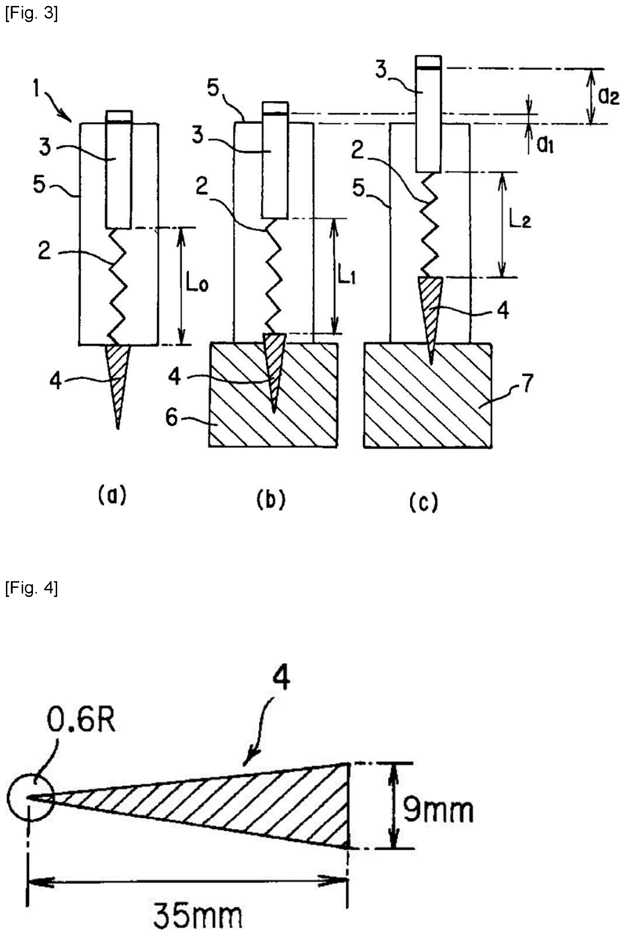

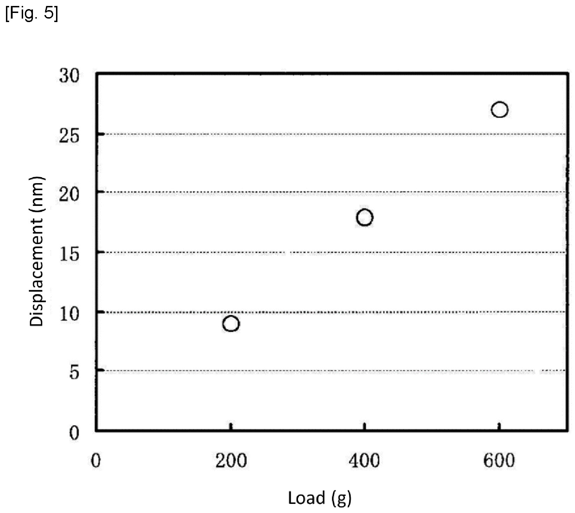

The content of the solvent in the forming raw material is determined so that the green body hardness is suitable for extrusion. The green body hardness is preferably in the range of 14 to 26 mm, more preferably 15 to 25 mm, and still more preferably 16 to 24 mm. In this specification, the green body hardness is measured by the following method. Fig. 3 is a schematic view illustrating the method for measuring the hardness of a green body using a hardness tester; (a) shows the overall view of the hardness tester, (b) shows the measurement state when the green body is soft, and (c) shows the measurement state when the green body is hard. Furthermore, Fig. 4 is an enlarged view showing the shape and dimensions of the tip of the hardness tester. A hardness tester 1 includes a conical tip 4 and a support member 3 connected by a spring member 2, which are housed within a cylindrical sheath 5 (Fig. 3(a)). Fig. 5 is a graph showing spring characteristics of the spring member 2 used. To measure the hardness of the green body, first, a 20 mm × 20 mm × 20 mm cubic sample is taken from the green body. This sample is placed on a flat surface, and a tip 4 of the hardness tester 1 is inserted vertically from above into the green body 6, 7 until a sheath 5 comes into contact with it. The insertion is performed such that a speed of the sheath is 1 mm/s. Then, a length (a1, a2) by which a support member 3 protrudes above the sheath 5 is read on 3 seconds after the sheath 5 comes into contact with the green body 6, 7, and a numerical value (mm) at this time is defined as the hardness of the green body 6, 7. Therefore, the larger the value, the higher the hardness of the green body, indicating that it is harder. As used herein, the average value obtained from measurements taken at two arbitrary locations is defined as the hardness measurement value of the green body. It should be noted that L₀, L₁, and L₂ indicate the lengths of the spring member 2. The hardness testers employing this method of hardness measurement are commercially available, and for example, the NGK-type hardness tester (Model No.: NGK-01) manufactured by NGK Insulators, Ltd. can be used.

Although the preferred characteristics, types, and mixing ratios of the carbon dioxide adsorbent have already been described, further details are provided below. It is preferable that the carbon dioxide adsorbent used as a forming raw material be porous. Furthermore, the median diameter (D50) of the carbon dioxide adsorbent, as determined by the volume-based cumulative particle size distribution obtained via the laser diffraction/scattering method, is preferably 200 µm or less, more preferably 100 µm or less, still more preferably 50 µm or less, still more preferably 30 µm or less, and still more preferably 15 µm or less, in order to prevent clogging during extrusion. The median diameter (D50) of the carbon dioxide adsorbent is preferably 0.1 µm or more, more preferably 0.5 µm or more, and still more preferably 1 µm or more, in terms of ease of availability and suppression of secondary agglomeration. Therefore, the median diameter (D50) of the carbon dioxide adsorbent is preferably 0.1 to 100 µm, more preferably 0.5 to 50 µm, still more preferably 1 to 50 µm, still more preferably 1 to 30 µm, and still more preferably 1 to 15 µm.

Although the preferred characteristics, types, and mixing ratios of the water resistance-imparting agent have already been described, the water resistance-imparting agent may be formulated in various forms, such as an emulsion in water or a polar solvent, an organic solvent-diluted type (e.g., lacquer-type), a solvent-free type, or a solid particle solvent-dispersed type. Therefore, there are no particular restrictions on its shape or size.

As previously described, the preferred properties, types, and mixing ratios of the organic binder have already been described. The water-soluble organic binders are dissolved during kneading. Therefore, there are no particular restrictions on shape or size, and it is sufficient to use organic binders in generally available forms. When using a water-insoluble organic binder, it is dissolved during kneading if an organic solvent is used. Therefore, there are no particular restrictions on shape or size, and it is sufficient to use organic binders in generally available forms.

The forming raw material may further contain an inorganic binder.

The content of the inorganic binder in the forming raw material, excluding the solvent, is preferably 3 to 50% by mass, more preferably 4 to 40% by mass, and still more preferably 5 to 35% by mass, from the viewpoint of water resistance and crack suppression during drying.

Although the preferred properties, types, and mixing ratios of the inorganic binder have already been described, further details are provided below. It is preferable that the inorganic binder used as a forming raw material be porous.

The kneading of the forming raw material containing the above components may be performed using a conventional kneader, and it is desirable to knead them for the time required for ensuring that each component is uniformly distributed in the green body.

### (Step B)

In Step B, the honeycomb formed body having the plurality of cell channels that pass through the interior of the honeycomb formed body and are defined by partition walls is formed from the green body.

Typically, in Step B, the honeycomb formed body is extruded, which includes an outer peripheral wall and partition walls disposed on an inner peripheral side of the outer peripheral wall, the partition walls extending from a first end face to a second end face and defining a plurality of cells to form fluid flow paths (cell channels). During extrusion, a die having the desired overall shape, cell shape, partition wall thickness, cell density, and other characteristics may be used.

### (Step C)

In Step C, the honeycomb formed body is dried.

Since the honeycomb formed body contains a solvent immediately after forming, the solvent is removed by drying. For drying, conventionally known drying methods such as hot-air drying, microwave drying, dielectric drying, reduced-pressure drying, vacuum drying, and freeze drying may be used. Among these, the hot-air drying, the microwave drying, the dielectric drying, or a combination thereof is preferred because they allow the entire honeycomb formed body to be dried rapidly and uniformly. From the viewpoint of suppressing the decomposition of the carbon dioxide adsorbent, the water resistance-imparting agent, and the organic binder during drying, it is preferable to dry the honeycomb formed body in an air atmosphere at 20 to 150°C, it is more preferable to dry the honeycomb formed body in an air atmosphere at 30 to 140°C, and it is still more preferable to dry the honeycomb formed body in an air atmosphere at 40 to 130°C.

The method for producing the honeycomb structure according to an embodiment of the present invention may further include a step of forming a water-resistant layer on surfaces of the partition walls. This step may be performed either before Step C or after Step C.

Although the method for forming the water-resistant layer is not particularly limited, a slurry containing a water resistance-imparting agent and a solvent may be applied to the partition walls. For example, a water-resistant layer can be formed on the surfaces of the partition walls by immersing the honeycomb formed body (or honeycomb structure) in the slurry and then drying it.

### (4. Carbon Dioxide Capture Device)

The carbon dioxide capture device according to an embodiment of the present invention includes one or more of the above honeycomb structures 100. Because the honeycomb structure 100 has good water resistance, the carbon dioxide capture device can suppress the outflow or degradation of the carbon dioxide adsorbent when desorbing carbon dioxide (hereinafter also referred to as "CO₂") from the carbon dioxide adsorbent using a desorption gas such as steam.

The carbon dioxide capture device according to an embodiment of the present invention may further include a housing for accommodating the honeycomb structure 100. It is preferable that the housing be connected to pipes through which the target gas containing CO₂ and the desorption gas can be fed and discharged. With the carbon dioxide capture device having such a structure, the capture and desorption of CO₂ can be easily achieved.

### [Examples]

The content of the present invention will be described below in detail with reference to Examples, but the present invention is not construed as being limited thereto.

### (1. Raw Materials)

As a carbon dioxide (CO₂) adsorbent, the following commercially available, water-insoluble, weakly basic anion exchange resin (a styrene-based divinylbenzene polymer having a primary amine as a functional group with an exchange capacity of 2.0 meq/mL) was prepared. This ion exchange resin was in the form of porous granules. Furthermore, the median diameter (D50) as determined by the volume-based cumulative particle size distribution measured by the laser diffraction/scattering method was 10 µm.

As a water resistance-imparting agent, commercially available silicones (silicone rubber) were prepared.

As an organic binder, commercially available methylcellulose was prepared. When 31 g of this methylcellulose was added to 1 L of water at 60°C, stirred at 500 rpm for 30 minutes, cooled to 20°C after stirring, and the liquid portion was removed by suction filtration using filter paper Type 5C as defined in JIS P3801: 1995 and the solid portion was dried, the mass of the solid portion was 1 g or less.

The following commercially available materials were used as inorganic binders.
Inorganic Binder A: Diatomaceous earth
Inorganic Binder B: Sepiolite

Industrial water was prepared as the solvent.

### (2. Production of Honeycomb Structure)

A forming raw material was prepared by combining the components and solvent shown in Table 1. It should be noted that the content percentages of the carbon dioxide adsorbent, water resistance-imparting agent, organic binder, and inorganic binder in Table 1 refer to their content percentages when the total of them is set to 100% by mass (i.e., when the total of the components excluding the solvent is set to 100% by mass). Furthermore, the amount of solvent was adjusted so that the green body hardness, as measured using an NGK-type hardness tester (Model No.: NGK-01) manufactured by NGK Insulators, Ltd., was 17 mm. The forming raw material was then kneaded for 30 minutes using a vacuum kneader to prepare a cylindrical green body.

**[Table 1]**

| | Content(% by mass) | | | | |
|---|---|---|---|---|---|
| | CO₂ Adsorbent | Water Resistance-Imparting Agent | Organic Binder | Inorganic Binder | |
| | | | | A | B |
| Example 1 | 52 | 9 | 6 | 33 | -- |
| Example 2 | 65 | 9 | 7 | 19 | -- |
| Example 3 | 84 | 9 | 7 | -- | -- |
| Comparative Example 1 | 52 | -- | 6 | 33 | 9 |
| Comparative Example 2 | 65 | -- | 7 | 19 | 9 |

Next, the resulting cylindrical green body was formed using an extrusion molding machine equipped with a specific die structure to provide a cylindrical honeycomb formed body in which each cell had a rectangular cross-section perpendicular to the extending direction of the cells. The formability of the honeycomb formed body was evaluated by visually inspecting the honeycomb structure formed during extrusion. The formability was evaluated based on the following criteria. The results are shown in the "Formability" column of Table 2.
Circle: the honeycomb structure was formed without cracks on the partition walls;
Triangle: cracks were observed on the partition walls, but the honeycomb structure was formed;
x: Insufficient shape retention, the honeycomb structure could not be maintained.

The obtained honeycomb formed body was then dried by highfrequency dielectric heating, followed by drying in a microwave dryer at 100°C in an air atmosphere for 2 minutes. Both end faces were then cut to a predetermined length to produce the honeycomb structure. The honeycomb structure obtained by the above production method had circular end faces with a diameter of 60 mm and a height (length in the extending direction of the cells) of 120 mm. The cell density was 300 cells/in² (46.50 cells/cm²), and the average thickness of the partition walls was 200 µm. In addition, a required number of honeycomb structures for various tests were prepared and evaluated as follows:

### (3. Evaluation of the Honeycomb Structure)

### <B-Axis Compressive Strength>

Cubic samples with a side length of 20 mm were cut from the honeycomb structures, and the B-axis compressive strength was evaluated according to the method described above. This evaluation was conducted according to the following criteria. The results are shown in the "B-Axis Compressive Strength" column of Table 2.
Circle: No deformation or minor deformation (withstanding a load of 0.05 MPa);
x: Significant deformation (not withstanding a load of 0.05 MPa; the honeycomb structure cannot be maintained)

### <Amount of CO₂ Adsorbed>

After cutting a 20 mm × 20 mm × 40 mm (length in the extending direction of the cells 108) cubic sample from the vicinity of the center of the honeycomb structure, the amount of CO₂ adsorbed (mol) until saturation was reached was measured according to the method described above, and the amount of CO₂ adsorbed per unit mass of the sample (mol/kg) was calculated. This evaluation was conducted according to the following criteria. The results are shown in the "Amount of CO₂ Adsorbed" column of Table 2.
Double circle: Adsorbed amount of 0.8 mol/kg or more;
Circle: Adsorbed amount of 0.5 mol/kg or more but less than 0.8 mol/kg;
Triangle: Adsorbed amount of 0.1 mol/kg or more but less than 0.5 mol/kg;
x: Adsorbed amount of less than 0.1 mol/kg

### <CO₂ Adsorption Rate (CO₂ Residual Ratio)>

After cutting a cubic sample equivalent to 1.0 g from the vicinity of the center of the honeycomb structure, the CO₂ residual ratio was determined according to the method described above. This evaluation was conducted according to the following criteria. The results are shown in the "CO₂ Adsorption Rate" column of Table 2.
Double circle: CO₂ residual ratio of less than 40%;
Circle: CO₂ residual ratio of 40% or more but less than 50%;
Triangle: CO₂ residual ratio of 50% or more but less than 60%;
×: CO₂ residual ratio of 60% or more.

### <Compositional Analysis>

The honeycomb structure was crushed in an agate mortar, and the resulting crushed material was analyzed using a Fourier transform infrared spectrometer to obtain the FT-IR spectrum.

Furthermore, samples in which a peak attributable to Si-C bending (around 1250 to 1270 cm⁻¹) was confirmed in the FT-IR spectrum were marked with a circle (∘) (indicating the presence of silicones), while those in which it was not confirmed were marked with an X (×) (indicating the absence of silicones).

**[Table 2]**

| | Formability | B-Axis Compressive Strength | Amount of CO₂ Adsorbed | CO₂ Adsorption Rate | FT-IR |
|---|---|---|---|---|---|
| | | | | | Peak attributable to Si -C Bending |
| Example 1 | ○ | ○ | ○ | ⊚ | ○ |
| Example 2 | ○ | ○ | ⊚ | ○ | ○ |
| Example 3 | ○ | ○ | ⊚ | ○ | ○ |
| Comparative Example 1 | ○ | × | ○ | ○ | × |
| Comparative Example 2 | ○ | × | ⊚ | × | × |

As shown in Table 2, the honeycomb structures according to Examples 1 to 3, which contained the carbon dioxide adsorbent, the water resistance-imparting agent, and the organic binder, exhibited minimal deformation even under load and improved water resistance. Furthermore, other evaluation results showed that the formability, the amount of CO₂ adsorbed, and the CO₂ adsorption rate were also good.

In contrast, the honeycomb structures according to Comparative Examples 1 and 2, which did not contain a water resistance-imparting agent, deformed significantly under load and exhibited insufficient water resistance.

As can be seen from the above results, according to the present invention, it is possible to provide a honeycomb structure with improved water resistance, a method for producing the same, and a carbon dioxide capture device.

### [Description of Reference Numerals]

1: hardness tester
2: spring material
3: support portion
4: tip
5: sheath
6, 7: green body
a1, a2: projection length
100: honeycomb structure
102: outer peripheral wall
104: first end face
106: second end face
108: cell
112: partition wall

## Claims

1. A honeycomb structure comprising:
a plurality of cell channels that pass through an interior of the honeycomb structure and are defined by partition walls,
wherein the partition walls comprise a carbon dioxide adsorbent, a water resistance-imparting agent, and an organic binder.

2. The honeycomb structure according to claim 1, wherein the partition walls further comprise an inorganic binder.

3. The honeycomb structure according to claim 1 or 2, wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

4. The honeycomb structure according to claim 1 or 2, wherein the partition walls have a peak attributable to Si-C bending when measured by FT-IR (Fourier transform infrared spectroscopy).

5. The honeycomb structure according to claim 1 or 2, wherein the carbon dioxide adsorbent is dispersed in the partition walls.

6. The honeycomb structure according to claim 1 or 2, wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.

7. The honeycomb structure according to claim 1 or 2, wherein the honeycomb structure has a water-resistant layer on surfaces of the partition walls.

8. The honeycomb structure according to claim 7, wherein the water-resistant layer comprises one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

9. The honeycomb structure according to claim 1 or 2, wherein an amount of carbon dioxide adsorbed is 0.5 mol/kg or more.

10. The honeycomb structure according to claim 1 or 2, wherein the carbon dioxide adsorbent is a solid organic compound having an amino group(s).

11. The honeycomb structure according to claim 10, wherein the solid organic compound is a weakly basic anion exchange resin having an amino group(s).

12. The honeycomb structure according to claim 10, wherein the solid organic compound comprises one or more selected from styrene-divinylbenzene copolymers having amino groups and (meth)acrylic acid-divinylbenzene copolymers having amino groups.

13. A method for producing a honeycomb structure, the method comprising:
kneading a forming raw material comprising a solvent, a carbon dioxide adsorbent, a water resistance-imparting agent, and an organic binder to prepare a green body;
forming the green body into a honeycomb formed body, the honeycomb formed body having a plurality of cell channels that pass through an interior of the honeycomb formed body and are defined by partition walls; and
drying the honeycomb formed body.

14. The method for producing a honeycomb structure according to claim 13, wherein the forming raw material further comprises an inorganic binder.

15. The method for producing a honeycomb structure according to claim 13 or 14, wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

16. The method for producing a honeycomb structure according to claim 13 or 14, wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.

17. The method for producing a honeycomb structure according to claim 13 or 14, further comprising forming a water-resistant layer on surfaces of the partition walls.

18. The method for producing a honeycomb structure according to claim 13 or 14, wherein the carbon dioxide adsorbent is a solid organic compound having an amino group(s).

19. The method for producing a honeycomb structure according to claim 18, wherein the solid organic compound is a weakly basic anion exchange resin having an amino group(s).

20. The method for producing a honeycomb structure according to claim 18, wherein the solid organic compound comprises one or more selected from styrene-divinylbenzene copolymers having amino groups and (meth)acrylic acid-divinylbenzene copolymers having amino groups.

21. A carbon dioxide capture device comprising one or more of the honeycomb structures according to claim 1 or 2.

## Amended claims

### Amended claims under Art. 19.1 PCT

1. A honeycomb structure comprising:
a plurality of cell channels that pass through an interior of the honeycomb structure and are defined by partition walls,
wherein the partition walls are composed of a mixture comprising a carbon dioxide adsorbent, a water resistance-imparting agent, and an organic binder different from the water resistance-imparting agent.

2. The honeycomb structure according to claim 1, wherein the mixture further comprises an inorganic binder.

3. The honeycomb structure according to claim 1 or 2, wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

4. The honeycomb structure according to claim 1 or 2, wherein the partition walls have a peak attributable to Si-C bending when measured by FT-IR (Fourier transform infrared spectroscopy).

5. The honeycomb structure according to claim 1 or 2, wherein the carbon dioxide adsorbent is dispersed in the partition walls.

6. The honeycomb structure according to claim 1 or 2, wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.

7. The honeycomb structure according to claim 1 or 2, wherein the honeycomb structure has a water-resistant layer on surfaces of the partition walls.

8. The honeycomb structure according to claim 7, wherein the water-resistant layer comprises one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

9. The honeycomb structure according to claim 1 or 2, wherein an amount of carbon dioxide adsorbed is 0.5 mol/kg or more.

10. The honeycomb structure according to claim 1 or 2, wherein the carbon dioxide adsorbent is a solid organic compound having an amino group(s).

11. The honeycomb structure according to claim 10, wherein the solid organic compound is a weakly basic anion exchange resin having an amino group(s).

12. The honeycomb structure according to claim 10, wherein the solid organic compound comprises one or more selected from styrene-divinylbenzene copolymers having amino groups and (meth)acrylic acid-divinylbenzene copolymers having amino groups.

13. A method for producing a honeycomb structure, the method comprising:
kneading a forming raw material comprising a solvent, a carbon dioxide adsorbent, a water resistance-imparting agent, and an organic binder different from the water resistance-imparting agent to prepare a green body;
forming the green body into a honeycomb formed body, the honeycomb formed body having a plurality of cell channels that pass through an interior of the honeycomb formed body and are defined by partition walls; and
drying the honeycomb formed body.

14. The method for producing a honeycomb structure according to claim 13, wherein the forming raw material further comprises an inorganic binder.

15. The method for producing a honeycomb structure according to claim 13 or 14, wherein the water resistance-imparting agent is one or more selected from silicones, partially benzalized polyvinyl alcohol, (meth)acrylic resins, polyacrylate resins, polyacrylonitrile resins, polychloroprene, polyvinyl chloride, polyvinylidene fluoride, polyolefins, poly(tetrafluoroethylene), polyurethanes, phenolics, urethanes, polyvinyl butyral, ethylene-vinyl acetate copolymers, and synthetic rubbers.

16. The method for producing a honeycomb structure according to claim 13 or 14, wherein the organic binder is one or more selected from methylcellulose, hydroxypropyl methylcellulose, hydroxyethyl cellulose, hydroxypropyl cellulose, carboxymethyl cellulose, polyvinyl alcohol, hydroxyethyl methylcellulose, polyethylene oxide, polybutadiene, acrylate esters, methacrylate esters, and ethyl cellulose.

17. The method for producing a honeycomb structure according to claim 13 or 14, further comprising forming a water-resistant layer on surfaces of the partition walls.

18. The method for producing a honeycomb structure according to claim 13 or 14, wherein the carbon dioxide adsorbent is a solid organic compound having an amino group(s).

19. The method for producing a honeycomb structure according to claim 18, wherein the solid organic compound is a weakly basic anion exchange resin having an amino group(s).

20. The method for producing a honeycomb structure according to claim 18, wherein the solid organic compound comprises one or more selected from styrene-divinylbenzene copolymers having amino groups and (meth)acrylic acid-divinylbenzene copolymers having amino groups.

21. A carbon dioxide capture device comprising one or more of the honeycomb structures according to claim 1 or 2.

Statement under Art. 19.1 PCT
1. It has been clarified that the organic binder is a component distinct from the water resistance-imparting agent. In addition, the description that the partition walls are "composed of a mixture" containing prescribed components is based on the description in paragraphs [0068] to [0079] of the description as originally filed.

2. The expression has been amended in accordance with the amendment to claim 1.

3. It has been clarified that the organic binder is a component distinct from the water resistance-imparting agent.
